# EUROPEAN PATENT APPLICATION

(11) **EP 4 763 653 A1**
(43) Date of publication of application: **24.06.2026**
(21) Application number: 24221475.7
(22) Date of filing: 19.12.2024
(51) Int. Cl.: B60W 50/14

(54) **A COMPUTER-IMPLEMENTED METHOD FOR TRAINING OF A MACHINE-LEARNING MODEL IN ACCIDENT WARNING LEVEL ASSESSMENT FOR A DRIVER OF A TWO-WHEELED OR A THREE-WHEELED VEHICLE**

(71) Applicant: Autoliv Development AB, 447 37 Vårgårda (SE)
(72) Inventor: Ahmed, Jawwad, 447 37 Vårgårda (SE)
(74) Representative: Westpatent AB

(57) **Abstract**

The present disclosure relates to a computer-implemented method for training of a machine-learning model in vehicle accident warning level assessment for a two-wheeled or a three-wheeled vehicle (1) that is adapted to travel in a forward movement direction (D). The method comprises preparing (S100) training data, where preparing (S100) training data comprises obtaining and automatically acquiring (S110) a plurality of sets of sensor data (100), each set of sensor data (100) being collected during a corresponding time period. The method further comprises training (S200) the machine-learning model using the prepared training data, where training (S200) the machine-learning model comprises associating (S210) each set of sensor data (100) with a certain warning level (170), among a plurality of warning levels.

## Description

### DESCRIPTION OF THE DISCLOSURE

The present disclosure relates to an improved computer-implemented method for training of a machine-learning model in accident warning, or warning level, assessment for a driver of a two-wheeled or a three-wheeled vehicle

It is well-known that motorcycle (MC) accidents can result in severe injuries or can turn fatal, where part of the reason is the more exposed nature of the rider, or driver, of the MC as compared to the driver in a car, while the MC travels in the same speed intervals. Also, there is no restraint on the MC such as a seat belt as in a car. There are also other motion dynamics which make the MC rider, or MC driver, far more vulnerable in case of accident or a crash.

Many of the accidents related to MCs occur because of loss of control/balance or unable to handle the MC somehow in cities or other densely populated areas. Many time this can be due to slippery roads where there is higher probability of such accidents. A vast majority of these accidents are not related to crashes with another vehicle or persons on-road, but rather due to lost control that often can lead to an accident only involving the MC in question.

Accident situations of the above type occur also for other types of two- or three-wheeled vehicles such as bicycles, scooters and the like, MCs only being mentioned as an example.

In the light of this it is very useful to provide enhanced crash detection and crash warning mechanisms which can identify crash and accident situations proactively where a driver of a two- or three-wheeled vehicle is about to lose control of the vehicle which might end up in an accident that can turn fatal or result in serious injuries.

It is therefore desired to provide training data and models for data-driven machine-learning algorithms, i.e. for data-driven machine-learning computer programs, that can provide such enhanced vehicle accident warning level assessment.

This is achieved by means of a computer-implemented method for training of a machine-learning model in vehicle accident warning level assessment for a two-wheeled or a three-wheeled vehicle that is adapted to travel in a forward movement direction. The method comprises preparing training data which in turn comprises obtaining and automatically acquiring a plurality of sets of sensor data, each set of sensor data being collected during a corresponding time period. The method further comprises training the machine-learning model using the prepared training data, where training the machine-learning model comprises associating each set of sensor data with a certain warning level, among a plurality of warning levels.

By means of the present disclosure, a multilevel warning method is provided. This means that the different warning levels can be set in dependence of collected sensor data. This enables a proactive handling of potential accident events for a vehicle driver.

According to some aspects, associating each set of sensor data with a certain warning level comprises associating each collected set of sensor data with a corresponding hazard level for at least one condition of road surface slipperiness, road surface evenness, roll angle, vehicle speed and vehicle speed changes, and vehicle driver behavior, including vehicle driver posture.

This means that the collected sets of sensor data enable detection of many different types of conditions, environmental conditions as well as other conditions including high-speed driving, distractions and too much leaning sideways, that are related to accidents, including single accidents involving the vehicle driver and the vehicle only.

According to some aspects, associating each set of sensor data with a certain warning level comprises, for each set of sensor data, associating a hazard level with a corresponding hazard threshold for each condition using the set of sensor data. The hazard thresholds, alone and/or in combinations, are linked to certain warning levels. The associating further comprises setting or adjusting each hazard threshold.

This means that one hazard threshold, or a combination of two or more hazard threshold, is/are associated with a certain corresponding warning level. This enables a certain warning level to be determined in a versatile manner.

According to some aspects, associating each set of sensor data with a certain warning level comprises, for each set of sensor data, linking the hazard thresholds, alone and/or in combinations, to certain warning levels.

This means that linking the hazard thresholds to different warning levels is also a part of the trained machine-learning model.

According to some aspects, associating a hazard level for each condition and setting each hazard threshold is performed by collecting sensor data 100 using at least one of a simulated environment, a vehicle simulator that is driven by a test person, and recorded driving sessions where vehicle drivers run test vehicles along test tracks, and also by either automatically or manually associating one or more hazard levels for each condition and setting each hazard threshold.

This means that training data can be collected in many different ways, both in simulated environments and in real environments. In particular, when a trained machine-learning model is run in a real user situation, more training data is collected continuously and preferably put together centrally for all MCs that run and are equipped with the required data collection system.

According to some aspects, the sensor data are collected using at least one of a camera arrangement, an accelerometer, a gyroscope, a speedometer, Global Navigation Satellite Systems, GNSS, weather condition services, and road/traffic services.

This means that many types of available and well-known sensors can be used.

This is also achieved by means of a computer-implemented method for determining a vehicle accident warning level for a two-wheeled or a three-wheeled vehicle, comprising acquiring a set of sensor data, determining a certain warning level among a plurality of warning levels using the collected set of sensor data, and issuing a corresponding warning signal among a plurality of warning signals according to the determined warning level.

This means that different warning levels can be set in dependence of collected sensor data, and a suitable warning can be issued. This enables a proactive handling of potential accident events for a vehicle driver. It is to be noted that the computer-implemented method for determining a safety action according to the above does not need a trained machine-learning model to run, and not even be based on an ML system.

According to some aspects, the computer-implemented method further comprises determining the warning level by implementing the trained machine-learning model being trained in accordance with the computer-implemented method according to the above, and/or being trained in accordance with a computer-implemented method according to the above.

This means that the thresholds can be dynamic and need not be adjusted manually, where manual adjustment requires knowledge and experimentation to find optimal thresholds. Furthermore, safety factors which are difficult to quantify analytically in terms of thresholds such as steering angel, vehicle driver posture etc., are easily introduced. Applying the trained machine-learning model thus provides a flexible approach which can be updated continuously as more and more set of sensor data are collected.

According to some aspects, the warning signals are issued in the form of either no warning or at least one of a visual warning, a tactile warning, a message to an external device, and an active warning comprising at least one safety measure. According to some further aspects, a safety measure comprises an automatic reduction of speed and/or inflation of safety airbag.

In this manner, an active warning can take place in case it is determined that a crash is imminent. The active safety measure may be initiated a certain time after a corresponding warning level has been determined.

The present disclosure also relates to computer programs, control units and systems that are associated with the above advantages.

Accordingly, it is here appreciated that the computer-implemented methods, the computer programs and the computer readable mediums, all as described herein, and in accordance with the present disclosure, may be realized in hardware, such as, the control unit arrangements and the devices, all as described herein, as well as, in the systems, as described herein. The hardware such as the control unit arrangements all as described herein, as well as, the systems, as described herein, are then arranged to perform the computer-implemented methods, and the computer programs, whereby the same advantages and effects are obtained as discussed for the computer-implemented methods herein.

### BRIEF DESCRIPTION OF DRAWINGS

The present disclosure will now be described more in detail with reference to the appended drawings, where:
- Figure 1: schematically illustrates a user who rides a motor bike and sensors;
- Figure 2: schematically illustrates a control unit;
- Figure 3: shows an example computer program product;
- Figure 4A-4B: show flowcharts for methods according to the present disclosure; and
- Figure 5: shows a flowchart for methods according to examples.

### DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

Modern data driven approaches based on ML (Machine-Learning) and DL (Deep Learning) provide more flexibility to automatically learn from the provided crash data, driving data from various roads and other stress tests. Also, these methods can adopt to the newer crash scenarios, vehicles, and variable as more and more data is available. Essentially, they can be retrained and learn new crash scenarios when provided with newer data.

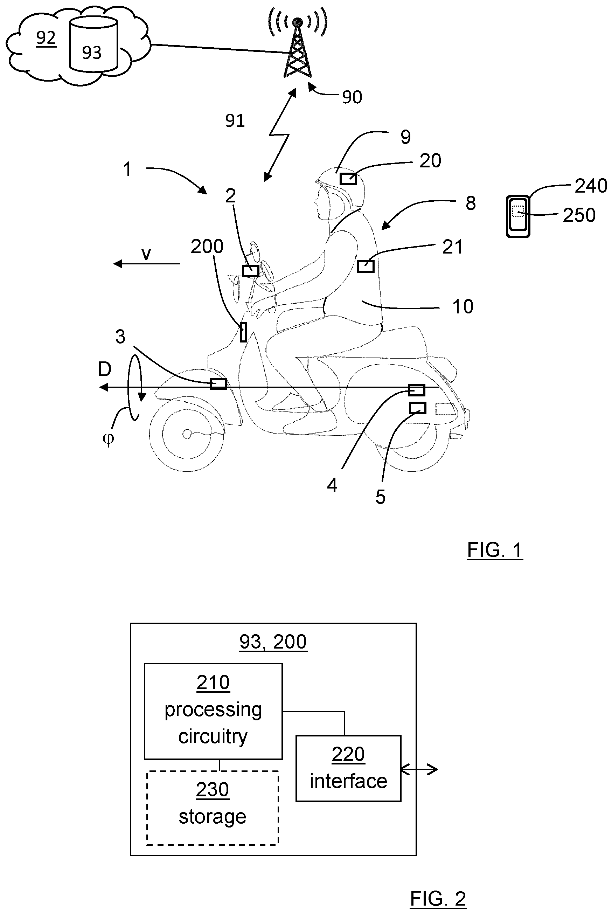

With reference to Figure 1, there is a subject 8 in the form of a rider 8 riding a vehicle in the form of a motorcycle (MC) 1, in the example the rider 8 is wearing a helmet 9 and a vest 10. In the following the MC rider will be referred to as an MC driver 8 or, more general, as a vehicle driver 8. It shall be appreciated that in this contest, a driver can also be regarded as a rider. According to some aspects, the MC 1 comprises a control unit 200 that is adapted to completely or partly process the methods as described herein. The methods as described herein may also, completely or partly, be processed at a remote server 93 and/or an external device processor 250, such as a mobile phone processor 250 comprised in a mobile phone 240, or a processor 250 comprised in any other type of external device 240.

It is to be noted that although MCs are used for illustrating the present disclosure, the present disclosure generally relates to any type of two- or three-wheeled vehicle, not only MCs. For example, so-called eScooters, electrically powered scooters, have skyrocketed in recent accident statistics, and therefore constitute an important group of vehicles in view of the present disclosure.

MCs with integrated airbag arrangements constitute an emerging technology which reduces the risk of severe injury or fatality in case of an MC accident. Furthermore, helmets 9, handles and dashboards can be equipped with one or more devices that can issue one or more types of warnings, both visual and audio warnings as well as haptic warnings such as vibrations.

There are numerous proposals regarding how to develop real time and non-real time crash or accident detection systems based on motion sensors to detect these crash or accident events. Sensors and associated apparatus can be integrated on the vehicle itself or on the vehicle driver 8, such as a fabric or a wearable such as the helmet 9 and the vest 10.

According to some aspects, at least one of the helmet 9 and the vest 10 comprises one or more airbags 20, 21 which are adapted to provide protection to the MC driver 8 that wears at least one of the vest 10 and the helmet 9 when the MC driver 8 is thrown away from the MC 1 after a crash. Such a helmet 9 may also be equipped with one or more devices that can issue one or more types of warnings. Other protective pieces of garment are conceivable, such as for example belts. One or more airbags 22 may also be integrated with the MC 1.

With reference to Figure 1, Figure 4A and Figure 5, the present disclosure relates to a computer-implemented method for training of a machine-learning model in vehicle accident warning assessment, in particular warning level assessment, for a two-wheeled or a three-wheeled vehicle 1 that is adapted to travel in a forward movement direction D.

As mentioned above, in the examples described, the vehicle is an MC 1, but any other type of a two-wheeled or a three-wheeled vehicle is of course conceivable. In the same way, where an MC driver 8 is mentioned, generally, this is applicable for a driver of a two-wheeled or a three-wheeled vehicle.

The method comprises preparing S100 training data, where preparing S100 training data comprises obtaining and automatically acquiring S110 a plurality of sets of sensor data 100, each set of sensor data 100 being collected during a corresponding time period. The method further comprises training S200 the machine-learning model using the prepared training data, where training S200 the machine-learning model comprises associating S210 each set of sensor data 100 with a certain warning level 170, among a plurality of warning levels.

By means of the present disclosure, a multilevel warning method is provided. This means that the different warning levels can be set in dependence of collected sensor data 100. This enables a proactive handling of potential accident events for an MC driver 8.

According to some aspects, associating S210 each set of sensor data 100 with a certain warning level 170 comprises associating S211 each collected set of sensor data 100 with a corresponding hazard level 110, 120, 130, 140, 150. This is done for at least one condition of road surface slipperiness, road surface evenness, roll angle φ, vehicle speed d and vehicle speed changes, and vehicle driver behavior, including posture. The roll angle φ can be a vehicle driver roll angle φ and/or a vehicle roll angle cp, and can be defined relative the forward movement direction D as shown in Figure 1.

This means that the collected sets of sensor data 100 enable detection of many different types of conditions, environmental conditions as well as other conditions including high-speed driving, distractions and too much leaning sideways, that are related to accidents, including single accidents involving the MC driver 8 and the MC 1 only.

According to some aspects, for each set of sensor data 100, associating S210 each set of sensor data 100 with a certain warning level 170 comprises associating S212 a hazard level 110, 120, 130, 140, 150 with a corresponding hazard threshold 111, 121, 131, 141, 151 for each condition using the set of sensor data 100, where the hazard thresholds 111, 121, 131, 141, 151 , alone and/or in combinations, are linked to certain warning levels 170, and setting or adjusting S123 each hazard threshold 111, 121, 131, 141, 151. Each hazard level 110, 120, 130, 140, 150 thus has its own corresponding hazard threshold 111, 121, 131, 141, 151. For a first (initial) set of sensor data, the hazard thresholds 111, 121, 131, 141, 151 are set, and for following sets of sensor data, the hazard thresholds 111, 121, 131, 141, 151 are adjusted.

This means that one hazard threshold 111, 121, 131, 141, 151, or a combination of two or more hazard threshold 111, 121, 131, 141, 151, is/are associated with a certain corresponding warning level 170. This enables a certain warning level 170 to be determined in a versatile manner.

According to some aspects, for each set of sensor data 100, associating S210 each set of sensor data 100 with a certain warning level 170 comprises linking S214 the hazard thresholds 111, 121, 131, 141, 151, alone and/or in combinations, to certain warning levels 170.

This means that linking the hazard thresholds 111, 121, 131, 141, 151 to different warning levels 170 is also a part of the trained machine-learning model.

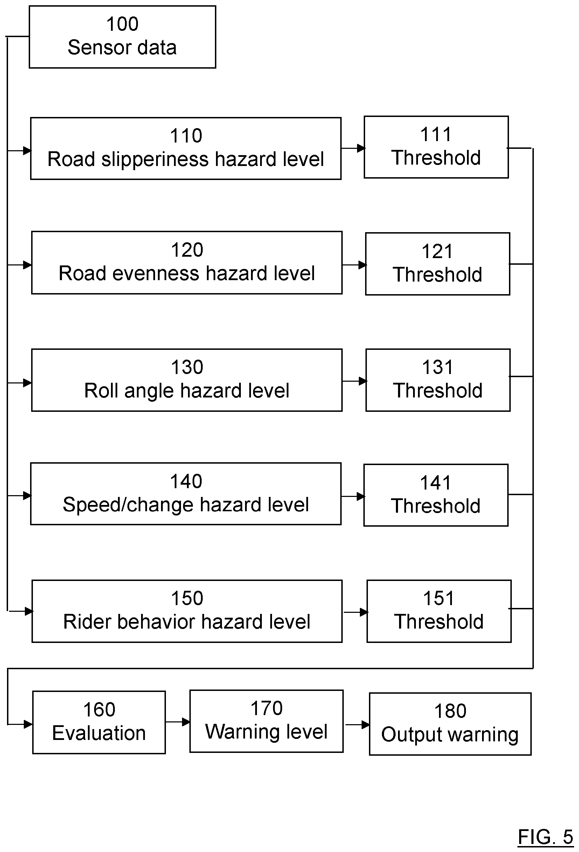

The above is illustrated in the example in Figure 5. Here, sensor data 100 is input, and then road slipperiness hazard level 110, road evenness hazard level 120, roll angle φ hazard level 130, speed and speed change hazard level 140 and vehicle driver behavior hazard level 150 are determined. For each one of these, a corresponding hazard threshold 111, 121, 131, 141, 151 is determined/adjusted. The hazard threshold 111, 121, 131, 141, 151 are associated with, or linked to, warning levels 170 in an evaluation step 160.

In this manner, a multilevel warning system is provided. In the following, an example of linking hazard thresholds 111, 121, 131, 141, 151 to certain warning levels 170 will be provided.
- A level 1 warning relates to being cautious and can be presented with a visual warning on the handlebar and/or dashboard.
- A level 2 warning relates to a more serious situation, and can be presented with additional haptics.
- A level 3 warning relates to a situation with an imminent crash risk and can trigger an active safety warning where the vehicle speed v is forcibly reduced as pre-cautionary measure to reduce the potential injury incase an accident/crash ensues.

For example a level 1 warning can be based on visuals such as LEDs on the handlebar while the level 2 warning can be combined with haptic signals and/or a low intensity audio pulse. The level 3 warning also combines the other warning with the active safety warning such as reducing the speed v of the MC 1.

The hazard thresholds 111, 121, 131, 141, 151 can be linked to certain warning levels 170 in many different ways that also can be updated. For example, the level 1 warning can be associated with two hazard levels 110, 120, 130, 140, 150 exceeding their corresponding hazard thresholds 111, 121, 131, 141, 151, the level 2 warning can be associated with three hazard levels 110, 120, 130, 140, 150 exceeding their corresponding hazard thresholds 111, 121, 131, 141, 151, and the level 3 warning can be associated with four or more hazard levels 110, 120, 130, 140, 150 exceeding their corresponding hazard thresholds 111, 121, 131, 141, 151.

The trained machine-learning model is trained on the collected sets of sensor data 100 and automatically learns the relationship between different warning levels and input safety factors sensor data via the hazard levels 110, 120, 130, 140, 150 and the hazard thresholds 111, 121, 131, 141, 151. According to some aspects, for each collected set of sensor data 100, the hazard thresholds 111, 121, 131, 141, 151 are updated, and how the hazard thresholds 111, 121, 131, 141, 151 are linked to certain warning levels 170 can be updated as well as mentioned above.

According to some aspects, associating a hazard level 110, 120, 130, 140, 150 for each condition and setting each hazard threshold 111, 121, 131, 141, 151 is performed by collecting sensor data 100 using at least one of a simulated environment, a vehicle simulator that is driven by a test person; and recorded driving sessions where vehicle drivers run test vehicles along test tracks.

One or more hazard levels 110, 120, 130, 140, 150 are associated either automatically or manually for each condition, and each hazard threshold 111, 121, 131, 141, 151 is set.

This means that training data, in particular sensor data 100, can be collected in many different ways, both in simulated environments and in real environments. In particular, when a trained machine-learning model is run in a real user situation, more training data is collected continuously and preferably put together centrally for all MCs that run and are equipped with the required data collection system.

According to some aspects, the sensor data 100 are collected by sensors 2, 3; 4, 5 that are positioned on the vehicle 1 or are remote from the vehicle 1, where the sensors are used for acquiring sensor data related to driving conditions and/or driver conditions.

According to some aspects, the sensor data 100 are collected using at least one of a camera arrangement 2, an accelerometer 3, a gyroscope 4, a speedometer 5, Global Navigation Satellite Systems, GNSS, 93, weather condition services 93 and road/traffic services 93. For example, road or traffic services in a certain area to communicate the road conditions such as slipperiness, roughness/unevenness or road quality etc. This means that many types of available and well-known sensors can be used.

Possible sensor configurations to detect sensor data for determining the conditions mentioned previously will be discussed in the following.

Wet and slippery road surface can be detected by:
a. Use of camera 2 with computer vision algorithm.
b. Use of weather condition services 93 in an area.

Roll angel φ can be detected/determined by:
a. Use of motion sensors situated on the MC 1 and/or the MC driver 8 such accelerometers 3 and gyroscopes 4.
b. Use of camera 2 with computer vision algorithm.

Speed of the MC 1 in combination to abrupt speed changes, for example caused by rapid breaking, can be detected by:
a. Use of either GPS/GNSS 93 and/or motion sensors 3, 4.
b. Use of a vehicle speedometer 5.

Driver distraction; whether the MC driver 8 is paying attention to the road or not, can be detected by:
a. Use of a driver facing camera 2 with computer vision algorithm.

Uneven surface can cause stronger than normal vibrations and can be detected by:
a. Use of an algorithm based on motion sensor input, for example input from gyroscope 3 and accelerometer 4.

The number and types of conditions described, as well as the number and types of warning levels described, are of course only examples, many other alternatives exist.

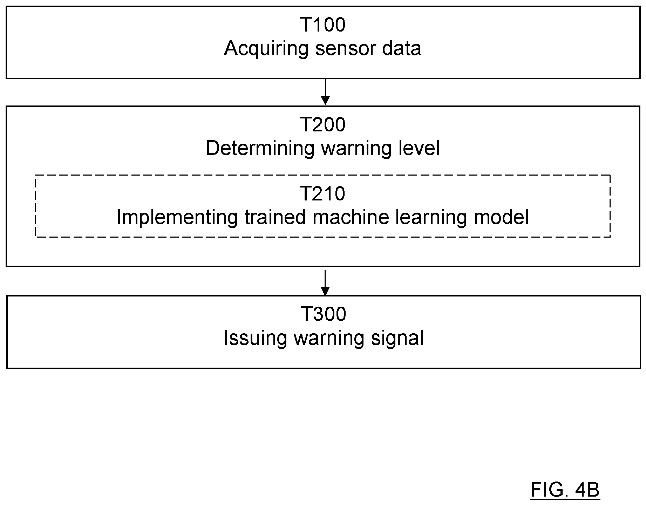

With reference to Figure 1, Figure 4B and Figure 5, the present disclosure relates to a computer-implemented method for determining a vehicle accident warning level for a two-wheeled or a three-wheeled vehicle 1. The method also relates to issuing a corresponding warning signal.

The method comprises acquiring T100 a set of sensor data 100, determining T200 a certain warning level 170 among a plurality of warning levels using the collected set of sensor data 100, and issuing T300 a corresponding warning signal 180 among a plurality of warning signals according to the determined warning level 170.

By means of the present disclosure, a multilevel warning method is provided. This means that the different warning levels can be set in dependence of collected sensor data 100, and a suitable warning can be issued. This enables a proactive handling of potential accident events for an MC driver 8. It is to be noted that one warning level can be constituted by "no warning".

It is also to be noted that the computer-implemented method for determining a safety action according to the above does not need a trained machine-learning model to run, and not even be based on an ML system. All sensor data processing and calculations can be performed analytically, without the help of a trained machine-learning model. The hazard thresholds 111, 121, 131, 141, 151 are set manually, as well as how the hazard thresholds 111, 121, 131, 141, 151 are linked to certain warning levels 170.

According to some aspects, the computer-implemented method further comprises using the collected set of sensor data 100 for determining a corresponding hazard level 110, 120, 130, 140, 150 for at least one condition of road surface slipperiness, road surface evenness, roll angle φ, vehicle speed v and vehicle speed changes, and vehicle driver behavior including vehicle driver posture. Here, the hazard levels 110, 120, 130, 140, 150 are determined and set manually.

According to some aspects, the computer-implemented method further comprises determining T200 the warning level 170 by implementing T210 the trained machine-learning model being trained in accordance with the computer-implemented method as described herein, and/or being trained in accordance with a computer-implemented method as described herein.

This means that the trained machine-learning model can be applied and used for determining T200 a certain warning level 170 among a plurality of warning levels using the collected set of sensor data 100.

This means that the thresholds can be dynamic and need not be adjusted manually, where manual adjustment requires knowledge and experimentation to find optimal thresholds. Furthermore, safety factors which are difficult to quantify analytically in terms of thresholds such as steering angel, vehicle driver posture etc., are easily introduced.

Applying the trained machine-learning model thus provides a flexible approach which can be updated continuously as more and more set of sensor data 100 are collected. Also, other alternative factors can also be considered for which it is very difficult or not possible to set manual threshold in a meaningful manner.

According to some aspects, the computer-implemented method further comprises determining the present warning level by comparing a hazard level 110, 120, 130, 140, 150 with a corresponding hazard threshold 111, 121, 131, 141, 151 for each condition using the collected set of sensor data 100, where the hazard thresholds 111, 121, 131, 141, 151, alone and/or in combinations, are linked to certain warning levels 170.

In this way the correct warning level is chosen in an efficient and reliable manner.

According to some aspects, the warning signals 180 are issued in the form of either no warning or at least one of a visual warning, a tactile warning, a message to an external device 240, and an active warning comprising at least one safety measure. In the context of the present disclosure, a warning level can also be regarded as a trigger level, for example for triggering at least one safety measure.

According to some aspects, such a safety measure comprises an automatic reduction of speed and/or inflation of safety airbag 20, 21, for example as described previously.

In this manner, an active warning in the form of an active safety measure can take place in case it is determined that a crash is imminent. The active safety measure may be initiated a certain time after a corresponding warning level has been determined.

According to some aspects, the present disclosure relates to a proactive safety method and corresponding safety system adapted to alert the MC driver 9, or to take active action, to lower the probability of an upcoming accident or crash that may be due to losing control of the MC 1 which in turn may be due to one or more of the conditions described.

According to some aspects, an indication or clue to the cause of why a certain warning level was initiated is provided to the MC driver 8. This will help the MC driver 8 to possibly correct the situation in due time before it leads to an increased warning level or maybe to an accident. This indication could be based on visual information and/or a sound-based indication.

By means of the present disclosure, according to some aspects, a relatively small focused list of crucial conditions are provided which are highly relevant for assessing the probability that an MC driver 8 will get involved in a single vehicle accident or crash.

According to some aspects, the present disclosure relates to a real-time multilevel safety approach which is flexible based on the safety threats posed for drivers of MCs and other two- or three-wheeled vehicles. To address this, factors caused by the conditions described above are considered.

The present disclosure provides an approach for a safety framework to detect high occurrence and potentially fatal safety events in proactive manner for drivers of MCs and other two- or three-wheeled vehicles.

The present disclosure may for example address single vehicle accident scenarios, which for example are dominant for eScooters, usually caused by the loss of control.

The control unit 200 may be constituted by a control unit arrangement with one or more control unit parts that can be separate from each other. Some or all control unit parts may be comprised in a control unit arrangement 200 and/or the remote server 93 as well as an external device processor 250, such as a mobile phone processor 250 comprised in a mobile phone 240, or a processor 250 comprised in any other type of external device 240.

Figure 2 schematically illustrates, in terms of a number of functional units, the components of a control unit 93, 200, 250 according to an embodiment.

Processing circuitry 210 is provided using any combination of one or more of a suitable central processing unit (CPU), multiprocessor, microcontroller, digital signal processor (DSP), dedicated hardware accelerator, etc., capable of executing software instructions stored in a computer program product, e.g. in the form of a storage medium 230. The processing circuitry 210 may further be provided as at least one application specific integrated circuit (ASIC), or field programmable gate array (FPGA) .

Particularly, the processing circuitry 210 is configured to cause the control unit 93, 200, 250 to perform a set of operations, or steps. These operations, or steps, were discussed above in connection to the various methods. For example, the storage medium 230 may store the set of operations, and the processing circuitry 210 may be configured to retrieve the set of operations from the storage medium 230 to cause the control unit 93, 200, 250 to perform the set of operations. The set of operations may be provided as a set of executable instructions. Thus, the processing circuitry 210 is thereby arranged to execute methods and operations as herein disclosed.

The storage medium 230 may also comprise persistent storage, which, for example, can be any single one or combination of magnetic memory, optical memory, solid state memory or even remotely mounted memory.

The control unit 93, 200, 250 may further comprise a communications interface 220 for communications with at least one other unit. As such, the communications interface 220 may comprise one or more transmitters and receivers, comprising analogue and digital components and a suitable number of ports for wired or wireless communication.

The processing circuitry 210 is adapted to control the general operation of the control unit 93, 200, 250 e.g. by sending data and control signals to the external unit and the storage medium 230, by receiving data and reports from the external unit, and by retrieving data and instructions from the storage medium 230. Other components, as well as the related functionality, of the control unit 93, 200, 250 are omitted in order not to obscure the concepts presented herein.

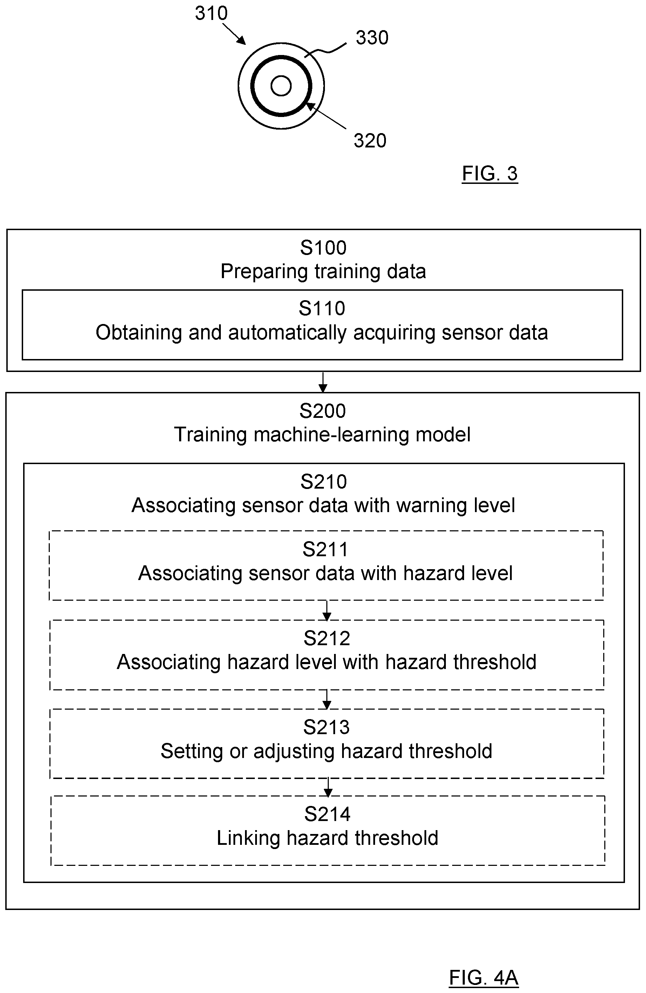

Figure 3 shows a computer program product 310 comprising computer executable instructions 320 arranged on a computer readable medium 330 to execute any of the methods disclosed herein.

The present disclosure also relates to a computer program 310, or computer program product 310, comprising computer readable instructions 320 for applying the computer-implemented method as described herein, and/or the preparation of training data, as described herein, and/or a computer readable medium 330 comprising said computer program 310.

The present disclosure also relates to a computer program 310, or computer program product 310, comprising computer readable instructions 320 for a machine-learning model as described herein, and/or a computer readable medium 330 comprising said computer program 310.

The present disclosure also relates to a control unit 93, 200, 250, for training of a machine-learning model, adapted to control at least, the implementing of the machine-learning model as described herein, and/or the preparation of training data as described herein.

According to some aspects, once the machine-learning model has been trained, it can at least partly be run on a remote server 93. According to some aspects, with reference to Figure 1, the computer-implemented method may be adapted to at least partly run on, and via, external units, for example a communication system 90 that provides wireless communication 91. This may, e.g., be a third generation partnership program (3GPP) defined access network like the fourth generation (4G) or the fifth generation (5G) access networks or a satellite system such as GPS. The access network may provide access to remote networks and other resources such as, e.g., the Internet.

In this manner training data can be collected from several users during normal running, such that the machine-learning model can be continuously updated.

It is also appreciated that some processing functions may be performed by resources in a remote network 92, such as the remote server 93.

The control unit 200 may be constituted by a control unit arrangement with one or more control unit parts that can be separate from each other.

According to some aspects, the machine-learning model is trained and run based on a neural network architecture.

The present disclosure also relates to a system for training of a machine-learning model in vehicle accident warning level assessment for a two-wheeled or a three-wheeled vehicle 1, for communication of information, for enabling implementation of the machine-learning model as described herein, and for enabling the preparation of training data as described herein. The system comprises a machine-learning model, sensors 2, 3, 4, 5, 6 acquiring sensor data 100, and means 93, 200, 250 for processing data.

The system utilizes the computer program 310 as described herein, and/or the computer readable medium 330 as described herein.

The present disclosure also relates to a safety system comprising the control unit 93, 200, 250, sensor devices 3, 4, 5; 93 and means for issuing the warnings 117 and means 20, 21 for performing at least one safety measure such as for example airbags 20, 21 and braking means.

## Claims

1. A computer-implemented method for training of a machine-learning model in vehicle accident warning level assessment for a two-wheeled or a three-wheeled vehicle (1) that is adapted to travel in a forward movement direction (D), where the method comprises
preparing (S100) training data,
where preparing (S100) training data comprises
obtaining and automatically acquiring (S110) a plurality of sets of sensor data (100), each set of sensor data (100) being collected during a corresponding time period;
and
training (S200) the machine-learning model using the prepared training data
where training (S200) the machine-learning model comprises
associating (S210) each set of sensor data (100) with a certain warning level (170), among a plurality of warning levels.

2. The computer-implemented method according to claim 1, wherein associating (S210) each set of sensor data (100) with a certain warning level (170) comprises
associating (S211) each collected set of sensor data (100) with a corresponding hazard level (110, 120, 130, 140, 150) for at least one condition of
- road surface slipperiness;
- road surface evenness;
- roll angle (φ);
- vehicle speed (v) and vehicle speed changes; and
- vehicle driver behavior, including vehicle driver posture.

3. The computer-implemented method according to claim 2, wherein associating (S210) each set of sensor data (100) with a certain warning level (170) comprises, for each set of sensor data (100),
associating (S212) a hazard level (110, 120, 130, 140, 150) with a corresponding hazard threshold (111, 121, 131, 141, 151) for each condition using the set of sensor data (100), where the hazard thresholds (111, 121, 131, 141, 151), alone and/or in combinations, are linked to certain warning levels (170); and
setting or adjusting (S123) each hazard threshold (111, 121, 131, 141, 151).

4. The computer-implemented method according to claim 3, wherein associating (S210) each set of sensor data (100) with a certain warning level (170) comprises, for each set of sensor data (100),
linking (S214) the hazard thresholds (111, 121, 131, 141, 151), alone and/or in combinations, to certain warning levels (170) .

5. The computer-implemented method according to any one of the claims 3 or 4, wherein associating a hazard level (110, 120, 130, 140, 150) for each condition and setting each hazard threshold (111, 121, 131, 141, 151) is performed by collecting sensor data (100) using at least one of
- a simulated environment;
- a vehicle simulator that is driven by a test person; and
- recorded driving sessions where vehicle drivers run test vehicles along test tracks;
and by either automatically or manually associating one or more hazard levels (110, 120, 130, 140, 150) for each condition and setting each hazard threshold (111, 121, 131, 141, 151)

6. The computer-implemented method according to any one of the previous claims, wherein the sensor data (100) are collected using at least one of
- a camera arrangement (2);
- an accelerometer (3);
- a gyroscope (4);
- a speedometer (5);
- Global Navigation Satellite Systems, GNSS, (93);
- weather condition services (93), and
- road/traffic services (93).

7. A computer-implemented method for determining a vehicle accident warning level for a two-wheeled or a three-wheeled vehicle, comprising
acquiring (T100) a set of sensor data (100);
determining (T200) a certain warning level (170) among a plurality of warning levels using the collected set of sensor data(100); and
issuing (T300) a corresponding warning signal (180) among a plurality of warning signals according to the determined warning level (170).

8. The computer-implemented method according to claim 7, further comprising using the collected set of sensor data (100) for determining a corresponding hazard level (110, 120, 130, 140, 150) for at least one condition of
- road surface slipperiness;
- road surface evenness;
- roll angle (φ);
- vehicle speed (v) and vehicle speed changes; and
- vehicle driver behavior including vehicle driver posture.

9. The computer-implemented method according to claim 7, further comprising determining (T200) the warning level (170) by
implementing (T210) the trained machine-learning model being trained in accordance with the computer-implemented method according to any one of the claims 1-6, and/or being trained in accordance with a computer-implemented method according to any one of the claims 1-6.

10. The computer-implemented method according to any one of the claims 7-9, further comprising
determining the present warning level by comparing a hazard level (110, 120, 130, 140, 150) with a corresponding hazard threshold (111, 121, 131, 141, 151) for each condition using the collected set of sensor data (100), where the hazard thresholds (111, 121, 131, 141, 151), alone and/or in combinations, are linked to certain warning levels (170).

11. The computer-implemented method according to any one of the claims 7-10, wherein the warning signals (180) are issued in the form of either no warning or at least one of
- a visual warning;
- a tactile warning;
- a message to an external device (240); and
- an active warning comprising at least one safety measure.

12. The computer-implemented method according to claim 11, wherein a safety measure comprises an automatic reduction of speed and/or inflation of safety airbag (20, 21).

13. A computer program (310) comprising computer readable instructions (320) for applying the computer-implemented method according to claim 9, and/or the preparation of training data, according to any one of claims 1-6, and/or a computer readable medium (330) comprising said computer program (310).

14. A control unit (93, 200, 250), for training of a machine-learning model, adapted to control at least, the implementing of the machine-learning model according to claim 9, and/or the preparation of training data according to any one of claims 1-6.

15. A system for training of a machine-learning model in vehicle accident warning level assessment for a two-wheeled or a three-wheeled vehicle (1), for communication of information, for enabling implementing the machine-learning model according to any one of claims 1-6, and for enabling the preparation of training data according to any one of claims 1-6;
where the system comprises a machine-learning model, sensors (2, 3, 4, 5) acquiring sensor data (100), and means (93, 120, 200) for processing data;
wherein the system utilizes the computer program (310) according to claim 13, and/or the computer readable medium (330) according to claim 13.
